(19) **Europäisches Patentamt**
**European Patent Office**
**Office européen des brevets**

(11) **EP 2 105 790 B1**

(12) **EUROPEAN PATENT SPECIFICATION**

(45) Date of publication and mention
of the grant of the patent:
**28.09.2011 Bulletin 2011/39**

(51) Int Cl.:
**G03B 21/10** *(2006.01)* **H04N 17/00** *(2006.01)*

(21) Application number: **09156383.3**

(22) Date of filing: **27.03.2009**

(54) **Automated geometry correction system for rear projection system**

Automatisches Geometriekorrektursystem für Rückprojektionssystem

Système automatique de correction de géométrie pour système de projection arrière

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **28.03.2008 US 58260**

(43) Date of publication of application:
**30.09.2009 Bulletin 2009/40**

(73) Proprietor: **Christie Digital Systems USA, Inc.
Cypress, CA 90630 (US)**

(72) Inventor: **Perkins, Michael
Kitchener Ontario ON N2H 6S5 (CA)**

(74) Representative: **ABG Patentes, S.L.
Avenida de Burgos 16D
Edificio Euromor
28036 Madrid (ES)**

(56) References cited:
**WO-A-00/18139 WO-A-03/043324
JP-A- 2000 276 099 US-B1- 6 219 011**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field

The specification relates generally to optical alignment in image projection systems, and specifically to automated geometry correction in rear-projection systems.

### Background

One of the major problems in traditional rear projection systems is in aligning the projected image to the front screen. The mechanical and optical tolerances of the projector relative to the screen results in an image that is rotated, keystoned, and is either over or under zoomed. This source of error is usually dealt with by manually adjusting the projector until an acceptable image is attained. In standalone systems (e.g. rear projection TV), the cost and complexity of this step is contained by accepting a relatively large error. This results in some loss of image information, as well as image quality.

In tiled applications (e g video walls), this loss of visual information cannot be accepted. In these systems, a complex and expensive adjustment mechanism is used, one that usually allows for 6 axis of adjustment (X, Y, Z translation, Roll, Pitch, and Yaw). This adjustment is often done by highly trained personnel at the time of manufacture, and again after any servicing is done to the display system. The process of aligning the image is often non intuitive and time consuming. The end result of this is that achieving an acceptable level of image alignment in rear projection tiled systems is very expensive.

U.S. Patent No. 6,219,011 discloses an electro-optical display apparatus which includes a plurality of modular units each having a projector for receiving electrical signals, converting them to optical images, and projecting the optical images via an optical projection system onto a screen. In this patent, the modular units are arranged in a side-by-side array such as to produce a combined display on the screen, and a calibration system detects distortions in the combined display caused by the projection system of each modular unit and modifies the electrical signals applied to the projector of each modular unit to correct the combined display with respect to the detected distortions.

### Summary

According to an aspect of an embodiment, it is provided a rear-projection system incorporating a projection engine and an image screen, as defined in independent claim 1.

According to further aspect of an embodiment, it is provided a method of automated geometric correction in a rear projection system incorporating a projection engine and an image screen as defined in independent claim 8.

### Brief Description of the Drawings

Embodiments are described with reference to the following figures, in which:

Figure 1 shows an exemplary rear projection system suitable for use with the automated geometry correction system;
Figure 2 shows the placement of the fiducials of an automated geometry correction system relative to an exemplary rear-projection system;
Figure 3 shows in greater detail the arrangement of the fiducial and corresponding light sensor on one side of a rear projection system;
Figure 4 shows an alternate embodiment of the automated geometry correction system further including a neighbour detection feature;
Figure 5 shows in greater detail a combined fiducial locator/neighbour detection arrangement for two adjacently positioned displays; and
Figure 6 shows a tiled display incorporating the combined fiducial locator/neighbour detection arrangement of Figure 5.

### Description of the Preferred Embodiments

The automated geometry correction system described herein is suitable for use in projection systems. In general, the automated geometry correction system makes use of a high resolution projection engine, an overscanned image, a plurality of strategically positioned light sensors, and an electronic imaging warping circuit to automatically align the projected image.

More specifically, the automated geometry correction system is suited for use in a rear-projection system generally comprising a high resolution projection engine mounted within a suitable chassis, and an image screen for receiving a projected image from the projection engine. The automated geometry correction system is dimensioned to fit within the rear-projection system without interfering with the image being projected upon the image screen.

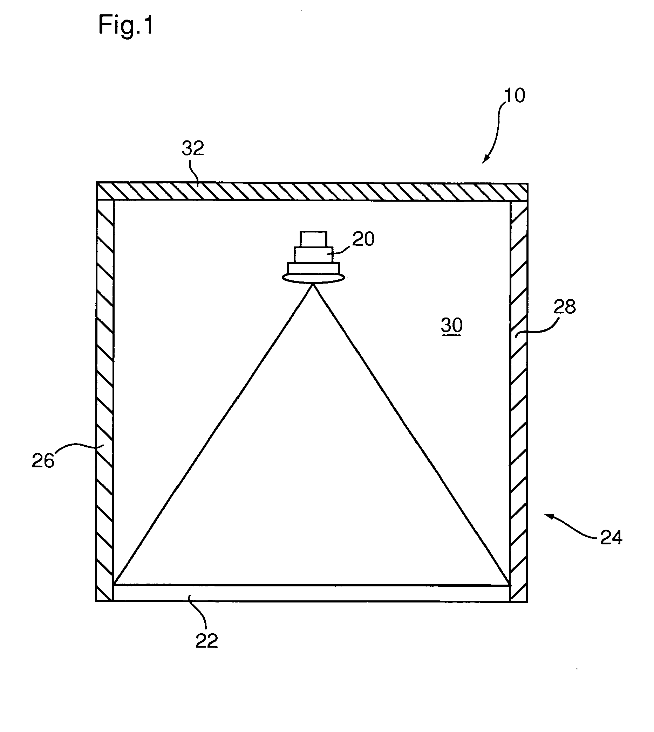

Referring now to Figure 1, shown is an exemplary rear-projection system 10 suitable for use with the automated geometry correction system. As shown, the rear-projection system 10 generally comprises a projection engine 20 and image screen 22, the projection engine 20 being mounted within a suitable chassis 24 comprising a first side wall 26 and a second side wall 28, a top wall 29 (not shown in Figure 1) and a bottom wall 30, and a rear wall 32 positioned opposite the image screen 22.

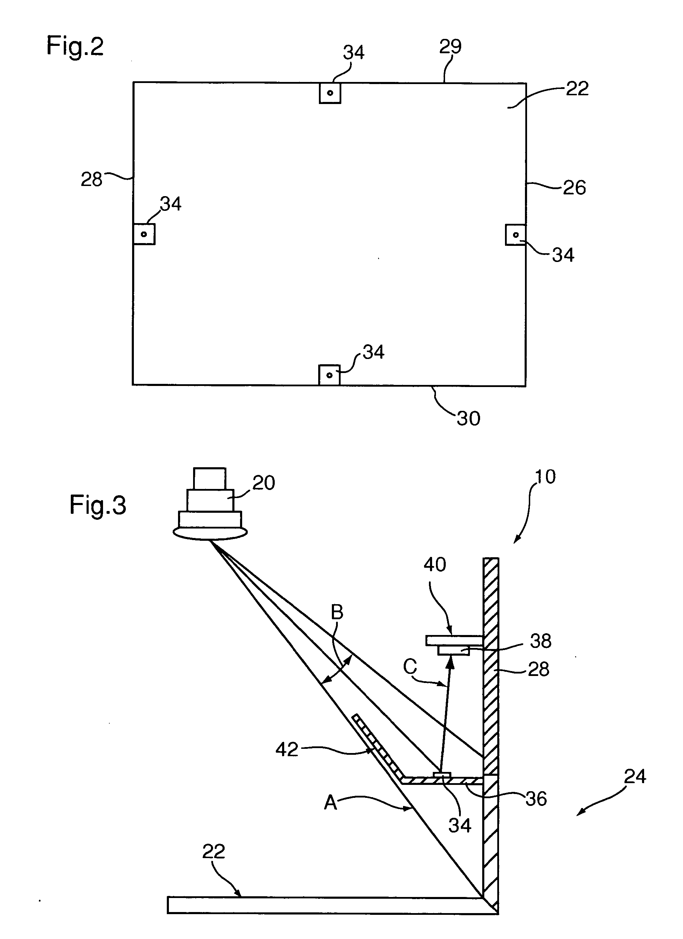

As shown in Figure 2, the automated geometry correction system incorporates a plurality of reference points 34, termed herein as *fiducials*, placed along each side of the rear-projection system 10. Each of the top 29, bottom 30, first 26 and second 28 sides of the rear-projection system are provided with one fiducial 34, each fiducial 34 being preferably dimensioned to match the size of an on-screen pixel. Since the image correction will ultimately depend on the alignment of the image to these fiducials, placement of the fiducials is generally engineered to tight tolerances. As such, the fiducials 34 are precisely located behind the image screen 22. In a preferred embodiment, the fiducials are located at the center of each of the top 29, bottom 30, first 26 and second 28 sides of the rear-projection system, but alternate locations on each side of the rear-projection system are also possible.

As shown in Figure 3, each fiducial 34 is generally a small highly reflective target, preferably surrounded by a dark non-reflective area. As shown, the fiducial is provided on a ledge 36 mounted directly to the chassis 24, behind the image screen 22. To reduce the incidence of shadows and image interference, the fiducial 34 and any supporting structure (e.g. the ledge 36) is preferably placed outside the limits of projection A having regard to each respective edge of the image screen 22. Complementing each fiducial 34 is a corresponding light sensor 38. Each corresponding light sensor is provided on a ledge/bracket 40 mounted directly to the chassis 24. Each light sensor 38 is positioned to detect light reflecting off each respective fiducial 34, allowing for precise locating of the fiducial 34 relative to the projection system. While the placement of the sensor 38 is not critical, it should be placed such that when the fiducial 34 is illuminated by light in the overscan region B, the sensor 38 is able to make a strong reading of any reflected light C. For stray light management, the ledge 36 is preferably provided with a shield 42 to protect the light sensor 38 from the small percentage of light backscattered from the image screen 22.

The method of automated geometric correction can be regarded as comprising two generalized steps. First, the system establishes the location of each fiducial 34 to relate the image to the screen. Second, the system subjects the image to a spatial transformation (image warping) to effect the geometric correction.

During the fiducial location, the goal is to determine the correspondence between the image panel coordinates (denoted u,v) and the screen coordinates (denoted x,y). There will be one pixel in the image that lands on any given fiducial 34. The fiducial location step described below is designed to systematically discover which image pixel corresponds to which fiducial 34.

A tolerance analysis of the rough alignment step when installing the projection engine will reveal a range (e.g. square block) of all pixels that may correspond to a given fiducial. A variety of methods may be implemented to identify the pixel corresponding to a given fiducial. The following is one non-limiting example of a suitable method. The aforementioned square block of pixels is first subdivided into four quadrants. A test pattern is then projected from the projection engine into the overscan region B that illuminates one of the quadrants, leaving the remaining three quadrants dark. A sensor reading is registered. The process is then repeated, with a second quadrant illuminated, and the remaining quadrants dark. The process continues for the remaining two quadrants, and the light sensor readings from each quadrant are compared. As one will appreciate, the quadrant containing the fiducial will have the strongest light sensor reading. The strongest light sensing quadrant is subsequently subdivided into quadrants, and the process of consecutive selective illumination of the quadrants is repeated. For each reiteration of this process, the search will narrow down the target area until the single image pixel most directly corresponding with the fiducial is identified. The aforementioned process is carried out for each fiducial in the automated geometric correction system. With all four fiducials being matched with a corresponding image pixel, the reverse map is generated.

In determining the nature of the electronic image correction required, there are two coordinate systems to consider, namely the screen coordinate system (denoted x,y) and the imaging panel coordinate system (denoted u,v). It is the misalignment between the imaging panel coordinate system (u,v) and the screen coordinate system (x,y) that creates the image distortion (keystone, rotation, etc.). By applying the appropriate inverse distortion (reverse map) in the screen coordinate system (x,y), a geometric correction can be effected to ensure the source image matches the screen correctly.

Keystone correction using inverse distortion is known. The induced distortion will be of the form

$$x = \frac{a*u+b*v+c}{g*u+h*v+1} \qquad y = \frac{d*u+e*v+f}{g*u+h*v+1}$$

Standard rearrangement of these equations provides

$$u*a+v*b+c+(-x*u)*g+(-x*v)*h = x$$

$$u*d+v*e+f+(-y*u)*g+(-y*v)*h = y$$

The coefficients a, b, c, d, e, f, g, and h determine the amount and nature of the keystone correction. Traditionally, these coefficients were calculated from knowledge of the amount and direction of the keystone and rotation. In the present system, the plurality of fiducials provide the correspondence between image coordinates and screen coordinates as explained above. Using the 4 sets of image (u,v) data with matching screen fiducial (x,y) locations, the coefficients (a - h) are determined.

Based on the above noted equations and the calculated coefficients, a complete mapping between pixels in the image to be displayed and the display panel is established. Using the mapping, for each pixel to be sent to the imaging panel, the location of the source pixel is determined. From the above equations, it will be known that the pixel at imaging panel location (u,v) will appear at screen location (x,y). In order for the projected image to appear free of distortion, the source image pixel should come from the same location. That is, if the pixel at column 147 and row 286 of the imaging panel (coordinate [147,286]) is calculated to appear at screen location [137.6, 246.3], then the pixel from [137.6, 246.3] of the source image should be used.

Due to the mapping, the source pixel now has fractional components. As such, there is no physical pixel that can be used, so a new output pixel is synthesized. While a variety of methods could be used to compute the value of the fractional coordinate, a bilinear scaling or interpolation method is discussed here for exemplary purposes.

With knowledge of the computed fractional coordinate, the four pixels neighbouring the fractional coordinate are determined. Using bilinear interpolation, an interpolated output pixel is determined based on the weighted sum of the nearest neighbouring pixels to the fractional input pixel coordinate, based on the following mathematical treatment:

Based on the established mapping, for output pixel location (u, v) calculate the source pixel location (x, y);
Calculate the output pixel value for location (u, v) in accordance with the following

$$P_{out} = P1 + (P2-P1)*B$$

where:

$$P1 = UL + (UR - UL)*A$$

$$P2 = LL + (LR - LL)*A$$

and,
R is the integer portion of x
C is the integer portion of y
A is the fractional component of x
B is the fractional component of y
UL is the source pixel value located at (C, R)
UR is the source pixel value located at (C+1, R)
LL is the source pixel value located at (C, R+1)
LR be the source pixel value located at (C+1, R+1)

Thus, for the source pixel located a coordinate (x, y), the output pixel value based on the weighted sum of the nearest neighbouring pixels will be $P_{out}$. This process is subsequently repeated to permit a full reverse distortion or mapping for all pixels in the image.

As previously indicated, the automated geometric correction system described above is well suited for use in rear-projector systems. In an alternate embodiment, the automated geometric correction system can be extended to include a neighbour detection feature suitable for use when multiple rear-projection systems are tiled together to form a single, seamless display (herein referred to as a *tiled display*). In tiled displays, the spatial relationships of all the projectors in the array relative to one another must be known. By knowing how many projectors are in the array, and where they sit relative to each other, each projector can be assigned a specific portion of the image to display, and a single coherent picture can be formed.

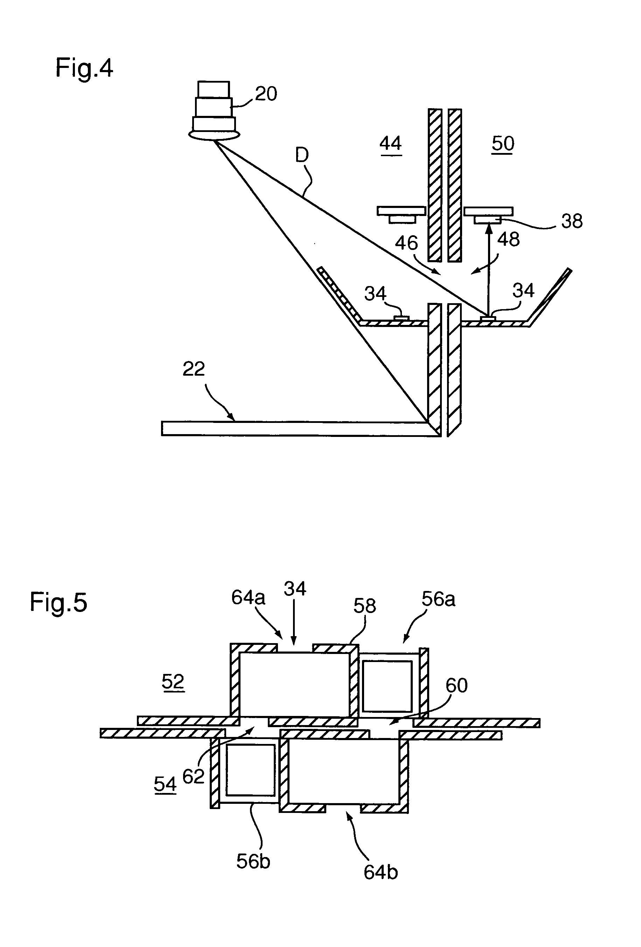

The general concept of neighbour detection with respect to two adjacently positioned displays is generally represented in Figure 4 (with reference to the previously discussed embodiment, like elements are shown with like numbers). As shown, a portion of light D projected from a projection engine 20 in a first display 44 is allowed to pass through aligned holes 46, 48 in each of the chassis. A light sensor 38 in the second display 50 is used to detect the incoming light D, thereby confirming the presence of the adjacently positioned first display 44. The light sensor 38 used to detect the incoming light D during neighbour detection can be a dedicated light sensor, or preferably, is the light sensor used for fiducial location during geometric correction.

Figure 5 presents one exemplary embodiment of a combined fiducial locator/neighbour detection arrangement for two adjacently positioned displays 52, 54. In this embodiment, a large white reflecting surface 56 is placed next to the fiducial 34 on the first display 52. To reduce the likelihood of interference between the reflecting surface 56 and the fiducial 34, light baffles 58 are preferably erected as shown.

The adjacently positioned displays 52, 54 are configured with a pair of adjacently positioned holes 60, 62 to permit the passage of light from one display to the other for neighbour detection. As shown, the reflecting surface 56a of the first display 52 is aligned with a first of the pair of holes 60, the reflecting surface 56a assisting in the passage of light from the first display 52 to the fiducial chamber 64b of the second display 54. Similarly, the reflecting surface 56b of the second display 54 is aligned with a second of the pair of holes 62, the reflecting surface 56b assisting in the passage of light from the second display 54 to the fiducial chamber 64a of the first display 52.

In a preferred embodiment, the inner walls of the fiducial chamber are painted white to aid in strengthening the received signal. The fiducial itself is preferably located on a black background.

With the above-described arrangement, if a second neighbouring display 54 is present, and the second display 54 illuminates its light reflecting surface 56b, the transmission of light from the light reflecting surface 56b of the second display 54 to the fiducial chamber 64a of the first display 52 will be detected at the light sensor of the first display 52. The detection of light at the light sensor of the first display 52 signifies the presence of an adjacently positioned second display 54.

When multiple rear-projection systems are tiled together to form a tiled display, it is necessary to map the array of displays. Prior to mapping the array, a system of communications between a master controller, and each display unit within the array needs to be established. As one will appreciate, there are numerous ways to establish communications between the controller, and each display unit. For example, communications may be effected by way of, but not limited to Ethernet, USB, or RS-232. Alternatively, communications may be effected by way of alternate methods, including proprietary communications.

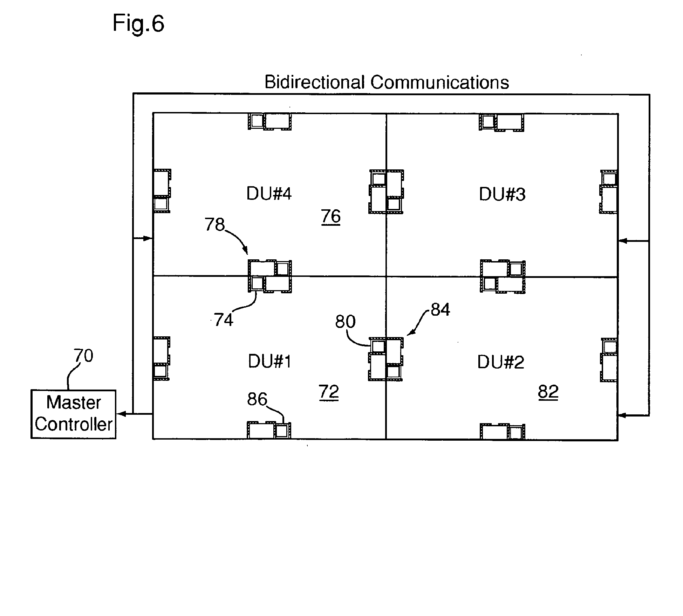

Figure 6 provides an exemplary configuration, to demonstrate how neighbour detection is established. Initially, all display units (DU) are commanded to project a black pattern at the reflecting surfaces. Each DU will read its four light sensors. This will establish a baseline measurement for black. Next, the master controller 70 will command DU#1 72 to illuminate its top light reflecting surface 74. The master controller 70 will now command all DUs to take a new reading from their respective light sensors, and then poll the DUs, requesting if any units can detect a change in detectable light. In the configuration shown, only DU#4 76 will respond in the affirmative, and it will indicate that its lower light sensor 78 can detect light. From this process, the master controller 70 now knows that DU#4 76 must be directly above DU#1 72.

DU#1 72 is now commanded to stop illuminating its top light reflecting surface 74, and to illuminate its right hand side reflecting surface 80. Once again, all DUs are polled, requesting if any units can detect a change in detectable light. In the exemplary configuration shown, DU#2 82 will respond that its left light sensor 84 can detect light. The master controller now knows DU#2 82 is to the right of DU#1 72.

In the next step, DU#1 illuminates only its bottom light reflecting surface 86. This time, when the DUs are polled, requesting if any units can detect a change in detectable light, all units will respond in the negative. With this information, the master controller 70 knows that DU#1 72 does not have any units below it.

This process is repeated for each light reflecting surface of each DU. With the information received during polling of each DU, the master controller is able to completely map out the array, to know exactly where each unit is, and to assign that unit an appropriate piece of the over all image to display.

The aforementioned automated geometry correction systems has been described as having the fiducials provided on a ledge that is mounted directly to the chassis. In some embodiments, particularly for rear-projection systems having removable screens, it is preferred that the fiducials are mounted on the screen, with the respective corresponding light sensors being mounted to the chassis. This eliminates any need for electrical connections to the screen, and allows for screen replacement without manual recalibration. This arrangement would also reduce the need for specialized personnel during routine service.

The above discussion provides an exemplary process for determining the correspondence between the image coordinates and the screen coordinates. One skilled in the art will appreciate that a plurality of methods can be used to determine this correspondence, and the examples provided are not intended to be limiting in any way.

In the field of image warping, bilinear scaling is generally considered to provide an excellent balance between cost and quality. One skilled in the art will appreciate, however, that bilinear scaling can be suitably substituted by any number of alternative imaging warping algorithms and the use of bilinear scaling in the present discussion is merely exemplary and not intended to be limiting in any way. For example, alternate image warping algorithms include, but are not limited to Bicubic, Nearest Neighbour, and Spline Interpolation.

## Claims

1.  A rear-projection system (10) incorporating a projection engine (20) and an image screen (22), comprising an automated geometry correction system comprising at least one reference point or fiducial (34) placed along each edge (29, 30, 26, 28) of said image screen (22) to permit a correspondence between the image coordinate system (u,v) of said projection engine (20) and the screen coordinate system (x,y) of said image screen (34), a respective light sensor (38) to complement each of said at least one fiducial (34), a an image warping algorithm to effect an inverse distortion of the source image of said projection engine (20) for matching said image screen (22), based on said correspondence between said image coordinate system (u,v) and said screen coordinate system, (x, y), **characterised in that**: each of said at least one fiducial (34) is configured to receive light from an overscan region (B) outside the limits of the projected image (A), formed by an image beam projected from said projection engine (20) toward the image screen (22), and the respective light sensor (38) being configured to detect said light from the overscan region (B) reflected (C) from the at least one fiducial (34).

2.  The rear-projection system (10) according to claim 1, further comprising a neighbour detection portion comprising at least one light reflecting surface (56a, 56b) positioned in close proximity to said at least one fiducial (34), said light reflecting surface (56a, 56b) being configured to direct light to a light detector (38) in an adjacently positioned display (52, 54), wherein the detection of light at said light detector (38) in said adjacently positioned display (52, 54) provides an indication of two adjacently positioned displays (52, 54).

3.  The rear-projection system according to claim 1 or claim 2, wherein each fiducial (34) is dimensioned to match the size of an on-screen pixel.

4.  The rear-projection system according to claim 1 or claim 2, wherein each of said at least one fiducial (34) is located at the center of each said edge (29, 30, 26, 28) of said image screen (22).

5.  The rear-projection system according to claim 1 or claim 2, wherein each of said at least one fiducial (34) is a small highly reflective target.

6.  The rear-projection system according to claim 5, wherein each of said at least one fiducial (34) is further surrounded by a dark non-reflective area.

7.  The rear-projection system according to claim 1 or claim 2, wherein the image warping algorithm is selected from the group consisting of bilinear scaling, bicubic interpolation, nearest neighbour interpolation, and spline interpolation.

8.  A method of automated geometric correction in a rear projection system incorporating a projection engine (20) and an image screen (22), comprising the steps of:

    determining the location of at least one reference point or fiducial (34) placed along each edge (29, 30, 26, 28) of said image screen (22);
    determining a correspondence between the image coordinate system (u, v) and the screen coordinate system (x, y) ;
    subjecting the screen coordinate system (x, y) to a image warping algorithm to effect an inverse distortion of the source image of said projection engine (20) for matching said image screen (22); **characterised in that**: the steps of determining the location of at least one fiducial (34) and determining the correspondence between the image coordinate system (u, v) and the screen coordinate system (x, y) comprise the steps of illuminating the at least one fiducial (34) with light in an overscan region (B) outside the limit of a projected image (A), formed by said rear projection system (10), and determining the image coordinate of the pixel that results in maximal illumination of said fiducial (34), by means of a light sensor configured to detect light from the overscan region (B) reflected (C) from the at least one fiducial (34).

9. The method of automated geometric correction according to claim 8, wherein the image warping algorithm is selected from the group consisting of bilinear scaling, bicubic interpolation, nearest neighbour interpolation, and spline interpolation.

**Patentansprüche**

1. Rückprojektionssystem (10), in das eine Projektionseinheit (20) und ein Bildschirm (22) eingebaut sind, mit einem automatischen Geometriekorrektursystem, das aufweist: mindestens einen Bezugspunkt oder Festpunkt (34), der entlang jeder Kante (29, 30, 26, 28) des Bildschirms (22) platziert ist, um eine Korrespondenz zwischen dem Bildkoordinatensystem (u, v) der Projektionseinheit (20) und dem Schirmkoordinatensystem (x, y) des Bildschirms (34) zu ermöglichen, einen jeweiligen Lichtsensor (38), um jeden des mindestens einen Festpunkts (34) zu ergänzen, und einen Image-Warping-Algorithmus, um eine inverse Verzerrung des Quellenbilds der Projektionseinheit (20) zum Abgleichen des Bildschirms (22) auf der Grundlage der Korrespondenz zwischen dem Bildkoordinatensystem (u, v) und dem Schirmkoordinatensystem (x, y) zu bewirken, **dadurch gekennzeichnet, dass**: jeder mindestens eine Festpunkt (34) so konfiguriert ist, dass er Licht von einem Overscanbereich (B) außerhalb der Grenzen eines projizierten Bilds (A) empfängt, das durch einen Bildstrahl gebildet wird, der von der Projektionseinheit (20) zum Bildschirm (22) projiziert wird, und wobei der jeweilige Lichtsensor (38) so konfiguriert ist, dass er das Licht vom Overscanbereich (B) detektiert, das von dem mindestens einen Festpunkt (34) reflektiert (C) wird.

2. Rückprojektionssystem (10) nach Anspruch 1, ferner mit einem Nachbardetektionsabschnitt, der mindestens eine lichtreflektierende Oberfläche (56a, 56b) aufweist, die in enger Nähe zu dem mindestens einen Festpunkt (34) positioniert ist, wobei die lichtreflektierende Oberfläche (56a, 56b) so konfiguriert ist, dass sie Licht zu einem Lichtdetektor (38) in einer angrenzend positionierten Anzeige (52, 54) lenkt, wobei die Detektion von Licht am Lichtdetektor (38) in der angrenzend positionierten Anzeige (52, 54) einen Hinweis auf zwei angrenzend positionierte Anzeigen (52, 54) gibt.

3. Rückprojektionssystem nach Anspruch 1 oder Anspruch 2, wobei jeder Festpunkt (34) so bemessen ist, dass er der Größe eines Bildschirmpixels entspricht.

4. Rückprojektionssystem nach Anspruch 1 oder Anspruch 2, wobei jeder mindestens eine Festpunkt (34) in der Mitte jeder Kante (29, 30, 26, 28) des Bildschirms (22) liegt.

5. Rückprojektionssystem nach Anspruch 1 oder Anspruch 2, wobei jeder mindestens eine Festpunkt (34) ein kleines hochreflektierendes Ziel ist.

6. Rückprojektionssystem nach Anspruch 5, wobei jeder mindestens eine Festpunkt (34) ferner von einer dunklen reflexionsfreien Fläche umgeben ist.

7. Rückprojektionssystem nach Anspruch 1 oder Anspruch 2, wobei der Image-Warping-Algorithmus aus der Gruppe ausgewählt ist, die aus bilinearer Skalierung, bikubischer Interpolation, Nächste-Nachbarn-Interpolation und Spline-Interpolation besteht.

8. Verfahren zur automatischen geometrischen Korrektur in einem Rückprojektionssystem, in das eine Projektionseinheit (20) und ein Bildschirm (22) eingebaut sind, aufweisend die Schritte:

Bestimmen der Lage mindestens eines Bezugspunkts oder Festpunkts (34), der entlang jeder Kante (29, 30, 26, 28) des Bildschirms (22) platziert ist;
Bestimmen einer Korrespondenz zwischen dem Bildkoordinatensystem (u, v) und dem Schirmkoordinatensystem (x, y);

Anwenden eines Image-Warping-Algorithmus auf das Schirmkoordinatensystem (x, y), um eine inverse Verzerrung des Quellenbilds der Projektionseinheit (20) zum Abgleichen des Bildschirms (22) zu bewirkten, **dadurch gekennzeichnet, dass**:

die Schritte des Bestimmens der Lage mindestens eines Festpunkts (34) und des Bestimmens der Korrespondenz zwischen dem Bildkoordinatensystem (u, v) und dem Schirmkoordinatensystem (x, y) die Schritte aufweisen:

Beleuchten mindestens eines Festpunkts (34) mit Licht in einem Overscanbereich (B) außerhalb der Grenze eines projizierten Bilds (A), das durch das Rückprojektionssystem (10) gebildet wird, und

Bestimmen der Bildkoordinate des Pixels, das zu maximaler Beleuchtung des Festpunkts (34) führt, mit Hilfe eines Lichtsensors, der so konfiguriert ist,

dass er Licht vom Overscanbereich (B) detektiert, das von dem mindestens einen Festpunkt (34) reflektiert (C) wird.

9. Verfahren zur automatischen geometrischen Korrektur nach Anspruch 8, wobei der Image-Warping-Algorithmus aus der Gruppe ausgewählt wird, die aus bilinearer Skalierung, bikubischer Interpolation, Nächste-Nachbarn-Interpolation und Spline-Interpolation besteht.

**Revendications**

1. Système de projection arrière (10) incorporant un dispositif de projection (20) et un écran d'images (22), comprenant un système de correction automatique de géométrie comprenant au moins un point de référence ou de repère (34) placé le long de chaque bord (29, 30, 26, 28) dudit écran d'images (22) pour permettre une correspondance entre le système de coordonnées d'image (u, v) dudit dispositif de projection (20) et le système de coordonnées d'écran (x, y) dudit écran d'images (34), un capteur de lumière respectif (38) pour compléter chacun desdit au moins un repère (34), et un algorithme de distorsion d'image pour effectuer une distorsion inverse de l'image source dudit dispositif de projection (20) afin de l'adapter audit écran d'images (22), sur la base de ladite correspondance entre ledit système de coordonnées d'image (u, v) et ledit système de coordonnées d'écran (x, y) **caractérisé en ce que** : chacun desdits au moins un repère (34) est configuré pour recevoir de la lumière provenant d'une région de surbalayage (B) à l'extérieur des limites d'une image projetée (A), formée par un faisceau d'images projeté par ledit dispositif de projection (20), vers l'écran d'images (22) et le capteur de lumière respectif (38) étant configuré pour détecter ladite lumière provenant de la région de surbalayage (B) réfléchie (C) par le au moins un repère (34).

2. Système de projection arrière (10) selon la revendication 1, comprenant en outre une partie de détection voisine comprenant au moins une surface de réflexion de lumière (56a, 56b) positionnée à proximité étroite dudit au moins un repère (34), ladite surface de réflexion de lumière (56a, 56b) étant configurée pour diriger la lumière vers un détecteur de lumière (38) dans un afficheur positionné à proximité adjacente (52, 54), dans lequel la détection de lumière au niveau dudit détecteur de lumière (38) dans ledit afficheur positionné à proximité adjacente (52, 54) fournit une indication de deux afficheurs positionnés à proximité adjacente (52, 54).

3. Système de projection arrière selon la revendication 1 ou la revendication 2, dans lequel chaque repère (34) est dimensionné pour correspondre à la taille d'un pixel à l'écran.

4. Système de projection arrière selon la revendication 1 ou la revendication 2, dans lequel chacun dudit au moins un repère (34) est positionné au centre de chacun desdits bords (29, 30, 26, 28) dudit écran d'images (22).

5. Système de projection arrière selon la revendication 1 ou la revendication 2, dans lequel chacun dudit au moins un repère (34) est une petite cible hautement réfléchissante.

6. Système de projection arrière selon la revendication 5, dans lequel chacun dudit au moins un repère (34) est en outre entouré d'une zone sombre non réfléchissante.

7. Système de projection arrière selon la revendication 1 ou la revendication 2, dans lequel l'algorithme de distorsion d'image est sélectionné à partir du groupe constitué d'une interpolation bilinéaire, d'une interpolation bicubique, d'une interpolation par plus proche voisin, et d'une interpolation spline.

8. Procédé de correction automatique de géométrie dans un système de projection arrière incorporant un dispositif de projection (20) et un écran d'images (22),comprenant les étapes de :

déterminer l'emplacement d'au moins un point de référence ou de repère (34) placé le long de chaque bord (29, 30, 26, 28) dudit écran d'images (22);

déterminer une correspondance entre le système de coordonnées d'image (u, v) et le système de coordonnées d'écran (x, y);

soumettre le système de coordonnées d'écran (x, y) à un algorithme de distorsion d'image pour effectuer une distorsion inverse de l'image source dudit dispositif de projection (20) afin de l'adapter audit écran d'images (22), **caractérisé en ce que** :

les étapes de détermination de l'emplacement d'au moins un repère (34) et de détermination de la correspondance entre le système de coordonnées d'image (u, v) et le système de coordonnées d'écran (x, y) comprennent les étapes d'éclairage du au moins un repère (34) à l'aide de lumière dans une région de surbalayage (B) à l'extérieur des limites d'une image projetée (A), formée par ledit système de projection arrière (10) et la détermination des coordonnées d'image du pixel qui résulte en un éclairage maximal dudit repère (34), au moyen d'un détecteur de lumière configuré pour détecter de la lumière provenant de la région de surbalayage (B) réfléchie (C) par le au moins un repère (34).

**9.** Procédé de correction automatique de géométrie selon la revendication 8, dans lequel l'algorithme de distorsion d'image est sélectionné à partir du groupe constitué d'une interpolation bilinéaire, d'une interpolation bicubique, d'une interpolation par plus proche voisin et d'une interpolation spline.

Fig.1

Fig.2

Fig.3

Fig.4

Fig.5

# Fig.6

Bidirectional Communications

Master Controller 70

DU#4 76
DU#3
DU#1 72
DU#2 82

78
74
86
80
84

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6219011 B